# EUROPÄISCHE PATENTSCHRIFT

(11) **EP 4 063 242 B1**
(45) Veröffentlichungstag und Bekanntmachung des Hinweises auf die Patenterteilung: **09.04.2025**
(21) Anmeldenummer: 22163269.8
(22) Anmeldetag: 21.03.2022
(51) Int. Cl.: B62D 33/023, B62D 33/03, B60P 1/28

(54) **BORDWANDERHÖHUNG**
EXTENSION OF SHIP SIDE
RÉHAUSSE DE RIDELLE

(30) Priorität: 25.03.2021 DE 102021107579
(43) Veröffentlichungstag der Anmeldung: 28.09.2022
(73) Patentinhaber: Franz Xaver Meiller Fahrzeug- und Maschinenfabrik - GmbH & Co KG, 80997 München (DE)
(72) Erfinder: RIEDL, Stefan, 80638 München (DE)
(74) Vertreter: Weickmann & Weickmann PartmbB

(56) Entgegenhaltungen:
- DE-A1- 102016 117 133
- DE-U1- 202015 106 895
- DE-U1- 202016 105 059
- JP-A- 2013 173 514
- JP-A- 2018 144 787
- JP-A- 2020 026 221
- US-A1- 2020 384 925

## Beschreibung

Die vorliegende Erfindung betrifft ein Kipperfahrzeug mit wenigstens einer aufsetzbaren Bordwanderhöhung, umfassend einen Fahrzeugkörper und einen daran kippbar getragenen Kipperaufbau mit Bordwänden, wobei wenigstens einer der Bordwände eine Bordwanderhöhung zugeordnet ist.

Es ist aus dem Stand der Technik bekannt, Kipperfahrzeuge im Bereich ihrer Bordwände mit Bordwanderhöhungen auszurüsten, um für leichte Ladegüter ein vergrößertes umrahmtes Ladevolumen erzeugen zu können. Prinzipiell können an allen vier Bordwänden von Kipperfahrzeugen, welche häufig aus verschweißten Stahlteilen gefertigt sind, derartige Bordwanderhöhungen vorgesehen und angebracht werden.

Hierbei ist es aus dem Stand der Technik beispielsweise bekannt, formschlüssige Aufnahmeeinrichtungen für die Bordwanderhöhungen an den Bordwänden vorzusehen, beispielsweise eingeschweißte Taschen im Obergurtprofil der entsprechenden Bordwand, angeschweißte oder angeschraubte Bügel oben an der Außenseite der Bordwand, angeschweißte oder angeschraubte Bügel an der Innenseite der Bordwand oder Anschraubbohrungen an der Bordwand auch an tieferen Positionen.

Beispiele für Kipperfahrzeuge mit Bordwanderhöhungen sind beispielsweise aus der DE 20 2016 105 059 U1 und der JP 2020 026221 A bekannt.

Diese Aufnahmeeinrichtungen weisen jedoch alle spezifische Nachteile auf, beispielsweise einen hohen Fertigungsaufwand im Fall der eingeschweißten Taschen sowie exponierte Bauteile mit Auswirkungen auf die Gesamtbreite des Fahrzeugs oder im Schüttgutbereich an der Innenseite der entsprechenden Bordwand im Falle der angeschweißten oder angeschraubten Bügel, während bei einem Vorsehen von Anschraubbohrungen an tieferen Positionen entsprechende Stützen dann stets innen oder außen exponiert sind und bei abgenommener Bordwanderhöhung Bohrungen im Schüttgutbereich freiliegen, die Einfallspunkte für Korrosion oder Verschmutzungen sein können.

Ferner müssen auch die entsprechenden Bordwanderhöhungen, welche häufig auch als Aufsatzwände bezeichnet werden und aus Aluminiumprofilen gefertigt sein können, mit Stützen versehen werden, welche entsprechend in die formschlüssigen Elemente der Bordwände eingeführt und dort gesichert oder formschlüssig verschraubt werden müssen. Dieses formschlüssige Einstecken erfordert stets ein gewisses Spiel und kann folglich dazu führen, dass die Bordwanderhöhungen im Betrieb ein wackliges Verhalten zeigen oder erneut Verschmutzungen eindringen können.

Ferner ist allen derartigen Bordwanderhöhungen gemein, dass sie die auf die Bordwanderhöhung wirkenden Betriebskräfte im Bereich ihrer Stützen über deren Querschnitt aufnehmen müssen. Auch hierdurch ist ein erhöhter Materialbedarf und Fertigungsaufwand für die Bordwanderhöhungen und die ihnen zugeordneten Stützen nicht zu vermeiden, sodass die aus dem Stand der Technik bekannten Bordwanderhöhungen mit ihren zugehörigen Befestigungsvorrichtungen an den Bordwänden noch Potential für Verbesserungen aufweisen.

Es ist demzufolge die Aufgabe der vorliegenden Erfindung, ein gattungsgemäßes Kipperfahrzeug mit wenigstens einer aufsetzbaren Bordwanderhöhung bereitzustellen, welches eine kostengünstige Herstellung ermöglicht, keine exponierten Teile an der Bordwand verlangt und gleichzeitig hervorragende Betriebseigenschaften hinsichtlich Passgenauigkeit und Festigkeit der Verbindung zwischen Bordwand und Bordwanderhöhung aufweist.

Zu diesem Zweck ist in dem erfindungsgemäßen Kipperfahrzeug die entsprechende wenigstens eine erhöhbare Bordwand zum Aufsetzen der Bordwanderhöhung an ihren beiden Seitenenden eingerichtet, wobei im Bereich der Seitenenden der erhöhbaren Bordwand und an den beiden Seitenenden der Bordwanderhöhung jeweilige Schnittstellen zur Anbringung eines Verbindungselements zum Befestigen der Bordwanderhöhung an der Bordwand vorgesehen sind und ansonsten die Bordwand und die Bordwanderhöhungen frei von Befestigungspunkten sind.

Demzufolge wird erfindungsgemäß mit einer direkten Verbindung zwischen der wenigstens einen zu erhöhenden Bordwand und der zugehörigen jeweiligen Bordwanderhöhung gearbeitet, sodass auf das Vorsehen von Stützen oder ähnlichem an den Bordwanderhöhungen verzichtet werden kann. Hierbei werden die jeweiligen Bauteildicken der Bordwand und der Bordwanderhöhung ausgenutzt, um über die entsprechenden Verbindungselemente eine tragende Kopplung zwischen den beiden Bauteilen erzeugen zu können. Insbesondere können hierbei die Verbindungselemente die Biegekräfte der Bordwanderhöhung, welche beispielsweise durch Betriebslasten und Ladungsdrücke entstehen können, im Wesentlichen als Zug- und Druckkräfte aufnehmen. Hierzu werden diese Zug- und Druckkräfte dauerhaft kraftschlüssig übertragen. Um den Kraftschluss weiter zu verbessern, könnten entsprechende zusätzliche Elemente wie geriffelte Formbleche, Reibungs-Folien oder -Pasten zum Einsatz kommen.

In jedem Fall zeigt sich, dass durch die erfindungsgemäße Ausgestaltung eines Kipperfahrzeugs nicht nur der Bauraum von seitlich angebrachten Stützen an der Bordwanderhöhung und entsprechenden Aufnahmen in der Bordwand eingespart werden kann, sondern dass die Schnittstellen der Bordwanderhöhung von ihrer Höhe unabhängig bleiben und kostengünstig gestaltet werden können. Weiterhin liegt in montiertem Zustand der Bordwanderhöhung keinerlei Spiel zwischen ihr und der Bordwand vor, so dass hier das Eindringen von Schmutz sowie Korrosion verhindert werden kann.

**In** einer möglichen Ausführungsform kann die wenigstens eine erhöhbare Bordwand zum Aufsetzen der Bordwanderhöhung an ihren beiden Seitenenden einen jeweiligen hochgezogenen Endabschnitt aufweisen, die wenigstens eine Bordwanderhöhung kann entsprechende komplementäre Ausnehmungen an ihren beiden Seitenenden aufweisen, und die Schnittstellen können jeweils den hochgezogenen Endabschnitten sowie den komplementären Ausnehmungen zugeordnet sein.

Insbesondere hat sich gezeigt, dass die Freiheit von Befestigungspunkten zwischen den an den Endabschnitten der Bordwand und der Bordwanderhöhung vorgesehen Verbindungselementen dadurch erzielt werden kann, dass die wenigstens eine aufsetzbare Bordwanderhöhung in Längsrichtung verlaufende verschweißte Hohlprofile umfasst, welche an den Seitenenden der Bordwanderhöhung mit ebenfalls verschweißten Einfassungen versehen sind. Alternativ zu einem Verschweißen können jedoch auch gesteckte oder verschnappte Hohlprofile mit vernieteten oder verschraubten Einfassungen zum Einsatz kommen. Auf diese Weise kann die Bordwanderhöhung in sich stabil und verbindungssteif genug gestaltet sein, sodass auf zusätzliche Stützen entlang ihrer Länge verzichtet werden kann. Weiterhin können in ähnlicher Weise hierbei auch die Ausnehmungen der Bordwanderhöhung ebenfalls von verschweißten Einfassungen eingefasst sein, wobei unabhängig von dieser Maßnahme jedoch stets darauf zu achten ist, dass der Bereich der Schnittstellen ausreichend druckstabil ausgeführt ist.

Zudem können in einer besonders einfachen und kostengünstigen Ausführungsform des erfindungsgemäßen Kipperfahrzeugs die Schnittstellen als Bohrungen oder Paare von Bohrungen ausgeführt sein und die Verbindungselemente mittels der Bohrungen sowohl mit der Bordwand als auch der Bordwanderhöhung verschraubbar sein. Derartige Bohrungen können beispielsweise in das jeweilige Bauteil lasergeschnitten sein, sodass hier eine große Flexibilität hinsichtlich der Herstellungsabläufe der jeweiligen Komponenten des Kipperfahrzeugs besteht. Des Weiteren kann durch diese Bauform ein hoher Symmetriegrad zwischen den beiden Enden der Bordwanderhöhung erzielt werden, was die Herstellungskosten davon weiter verringern kann.

Erfindungsgemäß umfassen die Verbindungselemente zwei einander gegenüberliegende Plattenabschnitte, welche jeweils sowohl an der Bordwand als auch an der Bordwanderhöhung flächig anliegen. Somit wird eine hervorragende Übertragung von Kräften und Momenten erzielt, welche auf die Bordwanderhöhung wirken und in die Bordwand und damit den Fahrzeugkörper abgeleitet werden sollen. Ebenfalls ist durch die eben beschriebene Bauform eine einfache Montage und Demontage der Bordwanderhöhung an der entsprechenden Bordwand gewährleistet.

In einer Ausführungsform der Erfindung können die Schnittstellen der Bordwanderhöhung derart ausgebildet sind, dass die Verbindungselemente fest der Bordwanderhöhung zugeordnet sind. Hierbei kann beispielsweise an eine Verschweißung der Verbindungselemente mit der Bordwand an entsprechenden als Schnittstellen wirkenden Schweißpunkten gedacht werden.

Alternativ oder zusätzlich können die wenigstens eine Bordwanderhöhung an ihrer Unterseite sowie die entsprechende Bordwand an ihrer Oberseite jeweils mit einer Abschrägung versehen sein. Auf diese Weise wird eine stetige und glatte Innenfläche im Übergang zwischen der Bordwand und der Bordwanderhöhung sichergestellt, was das Verklemmen von Ladegut in ansonsten möglicherweise vorliegenden Hohlräumen oder Hinterschneidungen zuverlässig verhindern kann.

Ebenfalls kann die Bordwanderhöhung an ihrer Unterseite auf der der Ladefläche des Kipperfahrzeugs zugeordneten Seite mit einer heruntergezogenen Blende versehen sein. Auf diese Weise können in Kipperfahrzeugen häufig an entsprechenden Positionen an der Innenseite der Bordwand vorgesehene Zurrösen von der Blende abgedeckt und geschützt werden.

Insbesondere kann in manchen Ausführungsformen der vorliegenden Erfindung wenigstens einer der hochgezogenen Endabschnitte der Bordwand ein Gestänge zum Freigeben einer benachbarten Bordwand für ein Kippen oder Pendeln tragen. In derartigen Bauformen ist somit der entsprechende Verschlusszapfen weit oben angesetzt, sodass das zugehörige Verschlussgestänge ebenfalls weit oben angeordnet werden kann und darunter ausreichend Freiraum für einen Betätigungsweg eines Bügels einer Seitenwandentlastung verbleibt. Der entsprechend hochgezogene Endabschnitt erfüllt somit zweierlei Funktionen, einerseits bildet er einen Ansatzpunkt für die Schnittstellen und das Verbindungselement zum Koppeln einer Bordwanderhöhung, zum anderen erlaubt er eine vorteilhafte Montage einer Verschlusseinrichtung für eine benachbarte Bordwand.

Wie bereits weiter oben angedeutet, kann die wenigstens eine aufsetzbare Bordwanderhöhung wenigstens teilweise aus Aluminium oder einer Aluminiumlegierung gefertigt sein, wodurch sowohl hinsichtlich Gewicht als auch mechanischer Eigenschaften und Kostenüberlegungen ein guter Kompromiss gefunden werden kann.

Wenngleich, wie angesprochen, sämtliche der Bordwände von Kipperfahrzeugen mit derartigen Bordwanderhöhungen ausgerüstet werden können, so können beispielsweise in jedem Fall die beiden Seiten-Bordwände des Kipperfahrzeugs mit aufsetzbaren Bordwanderhöhungen vorgesehen sein.

Weiterhin kann die Heck-Bordwand des Kipperfahrzeugs pendelnd ausgeführt sein und die entsprechende Pendelachse kann an den hochgezogenen Endabschnitten der beiden benachbarten Seitenwände getragen sein.

Zuletzt kann der wenigstens einen erhöhbaren Bordwand eine anpassbare Bordwandentlastung zugeordnet sein, welche wenigstens auf eine Entlastung der Bordwand ohne die Bordwanderhöhung und auf eine Entlastung der Bordwand mit der Bordwanderhöhung anpassbar ist und somit das sich verändernde Gesamtgewicht der Bordwand ausgleichen kann, wenn diese mit der Bordwanderhöhung versehen und gekoppelt ist.

Weitere Merkmale und Vorteile der vorliegenden Erfindung werden aus der nachfolgenden Beschreibung einer Ausführungsform davon deutlich, wenn diese gemeinsam mit den beilegenden Figuren betrachtet wird. Diese zeigen im Einzelnen:
- Fig. 1:: eine aus einer Bordwand und einer Bordwanderhöhung gebildete Baugruppe eines erfindungsmäßigen Kipperfahrzeugs;
- Fig. 2:: Detailansichten der beiden Endabschnitte der Baugruppe aus Figur 1 in einer Explosionsansicht; und
- Fig. 3: eine alternative Ausführungsform einer aus einer Bordwand und einer Bordwanderhöhung gebildeten Baugruppe eines erfindungsmäßigen Kipperfahrzeugs

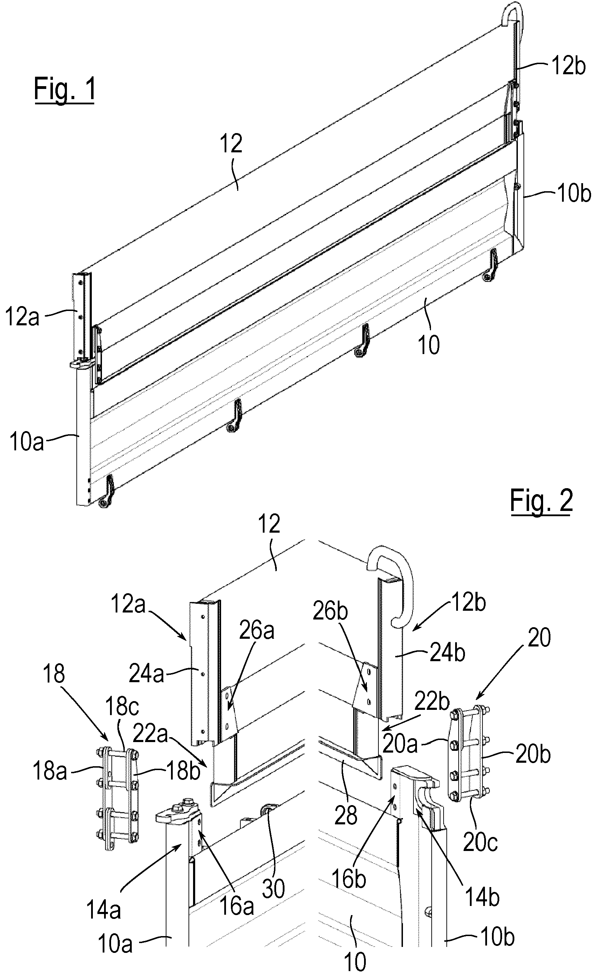

In Figur 1 ist zunächst einmal eine aus einer Bordwand 10 und einer Bordwanderhöhung 12 gebildete Baugruppe eines nicht weiter dargestellten erfindungsgemäßen Kipperfahrzeugs in einem montierten Zustand in einer schrägen Seitenansicht gezeigt. Sowohl die Bordwand 10 als auch die Bordwanderhöhung 12 sind aus verschweißten Profilteilen gebildet, wobei für die Bordwand 10 beispielsweise Stahl und für die Bordwanderhöhung 12 beispielsweise eine Aluminiumlegierung zum Einsatz kommen kann.

Hierbei sind durch die jeweiligen Profilierungen von sowohl der Bordwand 10 als auch der Bordwanderhöhung 12 eine ausreichende Festigkeit sowie eine entsprechende Verbindungssteifigkeit davon sichergestellt, welche es ferner erlauben, die Bordwand 10 und die Bordwanderhöhung 12 lediglich an ihren jeweiligen Endabschnitten 10a und 10b sowie 12a und 12b miteinander zu verbinden, während die Bordwand 10 und die Bordwanderhöhung 12 über den Rest ihrer Länge frei von weiteren Befestigungspunkten verbleiben können.

Um nun die lösbare Verbindung zwischen der Bordwand 10 und der Bordwanderhöhung 12 aus Figur 1 näher zu verdeutlichen, sind die entsprechenden Endabschnitte 10a und 10b sowie 12a und 12b in Figur 2 jeweils noch einmal vergrößert in einer Explosionsdarstellung gezeigt, welche einem demontierten Zustand der Bordwanderhöhung 12 entspricht. Hierbei ist zu erkennen, dass die Bordwand 10 im Bereich ihrer Endabschnitte 10a und 10b jeweilige hochgezogene Endabschnitte 14a und 14b umfasst, von welchen einer beispielsweise ein Gestänge zum Freigeben einer benachbarten Bordwand für ein Kippen oder Pendeln tragen könnte und somit eine doppelte Funktion aufweist. In der Tat sind nämlich die beiden hochgezogenen Endabschnitte 14a und 14b mit jeweiligen Paaren von Bohrungen 16a und 16b versehen, welche in der weiter unten beschriebenen Weise Anknüpfungspunkte für die beiden Verbindungselemente 18 und 20 zum Anbringen der Bordwanderhöhung 12 bilden.

Zunächst jedoch sein darauf verwiesen, dass die Bordwanderhöhung 12 in den Bereichen 12a und 12b jeweilige komplementäre Ausnehmungen 22a und 22b umfasst, welche ebenso wie die beiden Endabschnitte 12a und 12b von verschweißten Einfassungen 24a und 24b eingefasst sind.

Ferner ist zu erkennen, dass im Bereich der Ausnehmungen 22a und 22b analog zu der Bordwand 10 jeweilige Paare von Bohrungen 26a und 26b vorgesehen sind, welche in einem Zustand, in welchem die Bordwanderhöhung 12 auf die Bordwand 10 aufgesetzt ist und die erhöhten Endabschnitte 14a und 14b in den jeweiligen Ausnehmungen 22a und 22b einliegen, mit den entsprechenden Paaren von Bohrungen 16a und 16b linear ausgerichtet sind.

In diesem Zustand kann nun die Montage bzw. Fixierung der Bordwanderhöhung 12 an der Bordwand 10 mittels der Verbindungelemente 18 und 20 stattfinden, welche jeweils zwei einander gegenüberliegende Plattenabschnitte 18a und 18b bzw. 20a und 20b sowie durch diese mittels Bohrungen hindurchragende Schrauben-Mutter-Kombinationen 18c bzw. 20c aufweisen. Indem nun die vier Schrauben 18c des ersten Verbindungselements 18 durch die entsprechenden Bohrungen 14a und 26a hindurchgeführt werden und auf der Gegenseite mittels der entsprechenden Muttern arretiert werden, kann an dieser Seite der Bordwand 10 eine feste Verbindung mit der Bordwanderhöhung 12 erzielt werden, was im Übrigen ganz analog auch für das zweite Verbindungselement 20 an der gegenüberliegenden Seite von Bordwand 10 und Bordwanderhöhung 12 gilt.

Durch das flächige Anliegen der Plattenabschnitte 18a und 18b bzw. 20a und 20b an entsprechenden ebenen Abschnitten sowohl der Bordwand 10 als auch der Borwanderhöhung 12 wird ferner eine hervorragende Übertragung von Kräften und Momenten, die auf die Bordwanderhöhung 12 wirken, auf die Bordwand 10 und damit weiter auf den Fahrzeugkörper des erfindungsgemäßen Kipperfahrzeugs sichergestellt.

Weiterhin sei noch darauf hingewiesen, dass die Bordwanderhöhung 12 an ihrer Unterseite an der der Ladefläche des Kipperfahrzeugs zuweisenden Seite mit einer heruntergezogenen Blende 28 versehen ist, welche als Abdeckung und zum Schutz von an der Bordwand vorgesehenen Zurrösen 30 im montierten Zustand der Bordwanderhöhung 12 dienen kann.

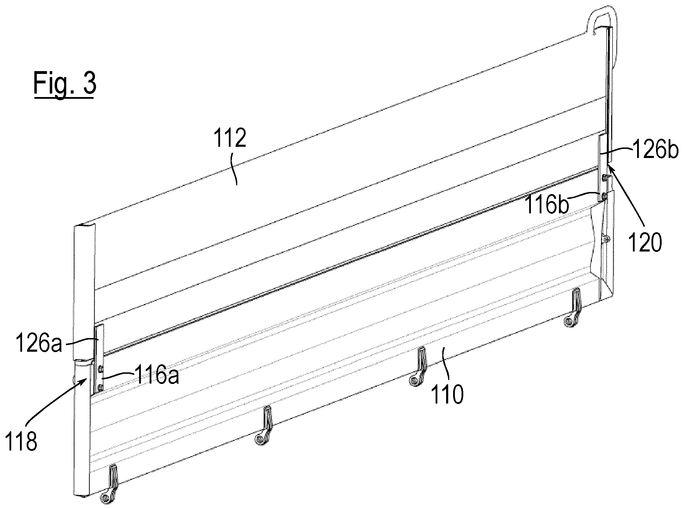

Figur 3 zeigt nun noch eine alternative Ausführungsform einer aus einer Bordwand 110 und einer Bordwanderhöhung 112 gebildeten Baugruppe eines erfindungsmäßigen Kipperfahrzeugs, wobei Komponenten, welche denjenigen aus der Ausführungsform aus Figur 1 entsprechen, jeweils mit demselben Bezugszeichen, erhöht um 100, versehen sind, und wobei unter Bezugnahme auf Figur 1 teilweise auf ihre Beschreibung verzichtet wird.

Im Unterschied zu der Ausführungsform aus Figur 1 wird in Figur 3 auf das Vorsehen von hochgezogenen Endabschnitten 14a, 14b sowie entsprechenden komplementären Ausnehmungen 22a, 22b verzichtet und die Unterseite der Bordwanderhöhung 112 ist ebenso wie die Oberseite der Bordwand 100 über ihre gesamte Länge im Wesentlichen geradlinig ausgeführt.

Weiterhin sind die Verbindungselemente 118 und 120, insbesondere entsprechende Plattenabschnitte der in Figur 2 gezeigten Art, fest der Bordwanderhöhung 112 zugeordnet, beispielsweise an sie angeschweißt. Demzufolge sind die entsprechenden Schnittstellen 126a, 126b durch die jeweiligen Schweißpunkte ausgeführt, während die Schnittstellen 116a, 116b der Bordwand 100 identisch zu denjenigen aus Figur 1 ausgeführt sind, so dass die Montage der Bordwanderhöhungen 12, 112 in beiden Ausführungsformen in derselben Weise ablaufen kann.

Hierbei können die Verbindungselemente 118, 120 ebenfalls an beiden Seiten der Bordwanderhöhung 112 vorgesehen sein oder beispielsweise auch nur an ihrer Außenseite, falls hierdurch bereits eine ausreichend feste Verbindung zwischen Bordwand 110 und Bordwanderhöhung 112 erzielt werden kann. Ebenfalls sei darauf hingewiesen, dass in einer weiteren Variante die Eigenschaften der beiden dargestellten Ausführungsformen kombiniert werden könnten, so dass auch bei einem Vorsehen der hochgezogenen Endabschnitte sowie der entsprechenden komplementären Ausnehmungen die Verbindungselemente fest der Bordwanderhöhung zugeordnet sein könnten.

## Patentansprüche

1. Kipperfahrzeug mit wenigstens einer aufsetzbarer Bordwanderhöhung (12), umfassend:
- einen Fahrzeugkörper; und
- einen daran kippbar getragenen Kipperaufbau mit Bordwänden (10), wobei wenigstens einer der Bordwände (10) eine Bordwanderhöhung (12) zugeordnet ist,
wobei die entsprechende wenigstens eine erhöhbare Bordwand (10) zum Aufsetzen der Bordwanderhöhung (12) an ihren beiden Seitenenden (10a, 10b) eingerichtet ist;
wobei im Bereich der Seitenenden (10a, 10b) der erhöhbaren Bordwand (10) und an den beiden Seitendenden (12a, 12b) der Bordwanderhöhung (12) jeweilige Schnittstellen (16a, 16b, 26a, 26b) zur Anbringung eines Verbindungselements (18, 20) zum Befestigen der Bordwanderhöhung (12) an der Bordwand (10) vorgesehen sind, und
ferner die Bordwand (10) und die Bordwanderhöhung (12) ansonsten frei von Befestigungspunkten sind,
**dadurch gekennzeichnet, dass** die Verbindungselemente (18, 20) zwei einander gegenüberliegende Plattenabschnitte (18a, 18b, 20a, 20b) umfasst, welche jeweils sowohl an der Bordwand (10) als auch an der Bordwanderhöhung (12) flächig anliegen.

2. Kipperfahrzeug nach Anspruch 1,
wobei die wenigstens eine erhöhbare Bordwand (10) zum Aufsetzen der Bordwanderhöhung (12) an ihren beiden Seitenenden (10a, 10b) einen jeweiligen hochgezogenen Endabschnitt (14a, 14b) aufweist,
die wenigstens eine Bordwanderhöhung (12) entsprechende komplementäre Ausnehmungen (22a, 22b) an ihren beiden Seitenenden (12a, 12b) aufweist, und
die Schnittstellen (16a, 16b, 26a, 26b) jeweils den hochgezogenen Endabschnitten (14a, 14b) sowie den komplementäre Ausnehmungen (22a, 22b) zugeordnet sind.

3. Kipperfahrzeug nach Anspruch 1 oder 2,
wobei die wenigstens eine aufsetzbare Bordwanderhöhung (12) in Längsrichtung verlaufende verschweißte Hohlprofile umfasst, welche an den Seitenenden (12a, 12b) der Bordwanderhöhung (12) mit ebenfalls verschweißten Einfassungen (24a, 24b) versehen sind.

4. Kipperfahrzeug nach Anspruch 2 und 3,
wobei die Ausnehmungen (22a, 22b) der Bordwanderhöhung (12) ebenfalls von verschweißten Einfassungen (24a, 24b) eingefasst sind.

5. Kipperfahrzeug nach einem der vorhergehenden Ansprüche,
wobei die Schnittstellen (16a, 16b, 26a, 26b) als Bohrungen oder Paare von Bohrungen ausgeführt sind und die Verbindungselemente (18, 20) mittels der Bohrungen sowohl mit der Bordwand (10) als auch der Bordwanderhöhung (12) verschraubbar ist.

6. Kipperfahrzeug nach einem der vorhergehenden Ansprüche, wobei die Schnittstellen (126a, 126b) der Bordwanderhöhung (112) derart ausgebildet sind, dass die Verbindungselemente (118, 120) fest der Bordwanderhöhung (112) zugeordnet sind.

7. Kipperfahrzeug nach einem der vorhergehenden Ansprüche,
wobei die wenigstens eine Bordwanderhöhung (12) an ihrer Unterseite und die entsprechende Bordwand (10) an ihrer Oberseite jeweils mit einer Abschrägung versehen sind.

8. Kipperfahrzeug nach einem der Ansprüche 1 bis 6,
wobei die Bordwanderhöhung (12) an ihrer Unterseite auf der der Ladefläche des Kipperfahrzeugs zugeordneten Seite mit einer heruntergezogenen Blende (28) versehen ist.

9. Kipperfahrzeug nach einem der vorhergehenden Ansprüche, wenigstens jedoch nach Anspruch 2
wobei wenigstens einer der hochgezogenen Endabschnitte (14a, 14b) der Bordwand (10) ein Gestänge zum Freigeben einer benachbarten Bordwand für ein Kippen oder Pendeln trägt.

10. Kipperfahrzeug nach einem der vorhergehenden Ansprüche,
wobei die wenigstens eine aufsetzbare Bordwanderhöhung (12) wenigstens teilweise aus Aluminium oder einer Aluminium-Legierung gefertigt ist.

11. Kipperfahrzeug nach einem der vorhergehenden Ansprüche,
wobei die beiden Seiten-Bordwände (10) des Kipperfahrzeugs mit aufsetzbaren Bordwanderhöhungen (12) vorgesehen sind.

12. Kipperfahrzeug nach einem der vorhergehenden Ansprüche,
wobei die Heck-Bordwand des Kipperfahrzeugs pendelnd ausgeführt ist und die Pendelachse an den hochgezogenen Endabschnitte der beiden Seitenwände getragen ist.

13. Kipperfahrzeug nach einem der vorhergehenden Ansprüche,
wobei der wenigstens einen erhöhbaren Bordwand (10) eine anpassbare Bordwandentlastung zugeordnet ist, welche wenigstens auf eine Entlastung der Bordwand (10) ohne die Bordwanderhöhung (12) und auf eine Entlastung der Bordwand (10) mit der Bordwanderhöhung (12) anpassbar ist.

## Claims

1. Tipper vehicle comprising at least one attachable side-wall extender (12), comprising:
- a vehicle body; and
- a tipper superstructure, which is borne thereon in a tippable manner and comprises side walls (10), at least one of the side walls (10) being assigned a side-wall extender (12),
the corresponding at least one extendable side wall (10) being configured for the side-wall extender (12) to be attached at both side ends (10a, 10b) of said side wall; respective interfaces (16a, 16b, 26a, 26b) being provided in the region of the side ends (10a, 10b) of the extendable side wall (10) and at both side ends (12a, 12b) of the side-wall extender (12) for the purpose of fitting a connecting element (18, 20) to fasten the side-wall extender (12) to the side wall (10), and
the side wall (10) and the side-wall extender (12) furthermore being otherwise free of fastening points,
**characterised in that** the connecting elements (18, 20) comprise two plate portions (18a, 18b, 20a, 20b) that are opposite each other and each abut both the side wall (10) and the side-wall extender (12) in a planar manner.

2. Tipper vehicle according to claim 1,
wherein the at least one extendable side wall (10) has respective raised end portions (14a, 14b) for attaching the side-wall extender (12) at both side ends (10a, 10b) of said side wall,
the at least one side-wall extender (12) has corresponding complementary recesses (22a, 22b) at both of its side ends (12a, 12b), and
the interfaces (16a, 16b, 26a, 26b) are each assigned to the raised end portions (14a, 14b) and to the complementary recesses (22a, 22b).

3. Tipper vehicle according to claim 1 or claim 2,
wherein the at least one attachable side-wall extender (12) comprises welded hollow profiles that extend in the longitudinal direction and are equipped, at the side ends (12a, 12b) of the side-wall extender (12), with trims (24a, 24b) that are also welded.

4. Tipper vehicle according to claim 2 and claim 3,
wherein the recesses (22a, 22b) in the side-wall extender (12) are likewise edged by welded trims (24a, 24b).

5. Tipper vehicle according to any of the preceding claims,
wherein the interfaces (16a, 16b, 26a, 26b) are configured as holes or pairs of holes, and the connecting elements (18, 20) can be screwed to both the side wall (10) and the side-wall extender (12) by means of the holes.

6. Tipper vehicle according to any of the preceding claims, wherein the interfaces (126a, 126b) of the side-wall extender (112) are formed such that the connecting elements (118, 120) are fixedly assigned to the side-wall extender (112).

7. Tipper vehicle according to any of the preceding claims,
wherein the at least one side-wall extender (12) is provided with a bevel on its underside, and the corresponding side wall (10) is provided with a bevel on its top side.

8. Tipper vehicle according to any of claims 1 to 6,
wherein the side-wall extender (12) is provided on its underside with a hipped cover (28) on the side assigned to the loading surface of the tipper vehicle.

9. Tipper vehicle according to any of the preceding claims, but at least according to claim 2,
wherein at least one of the raised end portions (14a, 14b) of the side wall (10) bears a linkage for releasing an adjacent side wall for it to tip or swing.

10. Tipper vehicle according to any of the preceding claims,
wherein the at least one attachable side-wall extender (12) is made at least in part of aluminium or an aluminium alloy.

11. Tipper vehicle according to any of the preceding claims,
wherein the two lateral side walls (10) of the tipper vehicle are provided having attachable side-wall extenders (12).

12. Tipper vehicle according to any of the preceding claims,
wherein the rear side wall of the tipper vehicle is configured to be able to swing, and the swing axle is borne on the raised end portions of the two lateral walls.

13. Tipper vehicle according to any of the preceding claims,
wherein the at least one extendable side wall (10) is assigned an adjustable side-wall strain reliever that can be adjusted at least to relieve strain on the side wall (10) when the side-wall extender (12) is not present and to relieve strain on the side wall (10) when the side-wall extender (12) is present.

## Revendications

1. Un véhicule à benne basculante avec au moins une réhausse de ridelle (12) posable, comprenant :
- une carrosserie de véhicule ; et
- une structure de benne basculante portée sur celle-ci de manière à pouvoir basculer, avec des ridelles (10), dans laquelle une réhausse de ridelle (12) est associée à au moins l'une des ridelles (10),
dans lequel ladite au moins une ridelle pouvant être réhaussée (10) est conçue pour poser la réhausse de ridelle (12) à ses deux extrémités latérales (10a, 10b) ;
dans lequel des interfaces respectives (16a, 16b, 26a, 26b) sont prévues dans la zone des extrémités latérales (10a, 10b) de la ridelle pouvant être réhaussée (10) et aux deux extrémités latérales (12a, 12b) de la réhausse de ridelle (12) pour la mise en place d'un élément de liaison (18, 20) pour la fixation de la réhausse de ridelle (12) à la ridelle (10), et en outre, la ridelle (10) et
la réhausse de ridelle (12) sont par ailleurs exemptes de points de fixation,
**caractérisé en ce que** les éléments de liaison (18, 20) comprennent deux sections de plaque (18a, 18b, 20a, 20b) opposées l'une à l'autre, qui s'appuient respectivement à plat aussi bien sur la ridelle (10) que sur la réhausse de ridelle (12).

2. Le véhicule à benne basculante selon la revendication 1,
dans lequel ladite au moins une ridelle pouvant être réhaussée (10) présente une section d'extrémité (14a, 14b) respective relevée à ses deux extrémités latérales (10a, 10b) pour poser la réhausse de ridelle (12),
dans lequel ladite au moins une réhausse de ridelle (12) présente des évidements complémentaires correspondants (22a, 22b) à ses deux extrémités latérales (12a, 12b), et
les interfaces (16a, 16b, 26a, 26b) sont respectivement associées aux sections d'extrémité relevées (14a, 14b) ainsi qu'aux évidements complémentaires (22a, 22b).

3. Le véhicule à benne basculante selon la revendication 1 ou 2,
dans lequel ladite au moins une réhausse de ridelle (12) posable comprend des profilés creux soudés s'étendant dans le sens longitudinal, qui sont pourvus, aux extrémités latérales (12a, 12b) de la réhausse de ridelle (12), de bordures (24a, 24b) également soudées.

4. Le véhicule à benne basculante selon les revendications 2 et 3,
dans lequel les évidements (22a, 22b) de la réhausse de ridelle (12) sont également bordés par des bordures soudées (24a, 24b).

5. Le véhicule à benne basculante selon l'une des revendications précédentes,
dans lequel les interfaces (16a, 16b, 26a, 26b) sont réalisées sous forme de perçages ou de paires de perçages et les éléments de liaison (18, 20) peuvent être vissés au moyen des perçages aussi bien avec la ridelle (10) qu'avec la réhausse de ridelle (12).

6. Le véhicule à benne basculante selon l'une des revendications précédentes,
dans lequel les interfaces (126a, 126b) de la réhausse de ridelle (112) sont réalisées de telle sorte que les éléments de liaison (118, 120) sont associés de manière fixe à la réhausse de ridelle (112).

7. Le véhicule à benne basculante selon l'une des revendications précédentes,
dans lequel ladite au moins une réhausse de ridelle (12) est pourvue d'un chanfrein sur sa face inférieure et la ridelle correspondante (10) sur sa face supérieure.

8. Le véhicule à benne basculante selon l'une des revendications 1 à 6,
dans lequel la réhausse de ridelle (12) est munie sur sa face inférieure, du côté associé au plateau de chargement du véhicule à benne basculante, d'un bandeau (28) abaissé.

9. Le véhicule à benne basculante selon l'une des revendications précédentes, mais au moins selon la revendication 2,
dans lequel au moins l'une des sections d'extrémité relevées (14a, 14b) de la ridelle (10) porte une tringlerie de libération d'une ridelle adjacente pour un basculement ou une oscillation.

10. Le véhicule à benne basculante selon l'une des revendications précédentes,
dans lequel ladite au moins une réhausse de ridelle posable (12) est fabriquée au moins partiellement en aluminium ou en alliage d'aluminium.

11. Le véhicule à benne basculante selon l'une des revendications précédentes,
dans lequel les deux ridelles latérales (10) du véhicule à benne basculante sont pourvues de réhausses de ridelle posables (12).

12. Le véhicule à benne basculante selon l'une des revendications précédentes,
dans lequel la ridelle arrière du véhicule à benne basculante est oscillante et l'essieu oscillant est porté par les parties d'extrémité relevées des deux ridelles latérales.

13. Le véhicule à benne basculante selon l'une des revendications précédentes,
dans lequel à ladite au moins une ridelle réhaussable (10) est associée une décharge de ridelle adaptable, qui peut être adaptée au moins à une décharge de la ridelle (10) sans la réhausse de ridelle (12) et à une décharge de la ridelle (10) avec la réhausse de ridelle (12).
